# EUROPÄISCHE PATENTSCHRIFT

(11) **EP 0 433 706 B1**
(45) Veröffentlichungstag und Bekanntmachung des Hinweises auf die Patenterteilung: **26.04.1995**
(21) Anmeldenummer: 90122559.9
(22) Anmeldetag: 26.11.1990
(51) Int. Cl.: H04L 25/49

(54) **Zusatzsignalübertragung in einem Übertragungssystem für digitale Signale hoher Bitfolgefrequenz**
Auxiliary signal transmission in a communication system for high bit-rate digital signals
Transmission d'un signal auxiliaire dans un système de communication pour signaux numériques à grand débit

(30) Priorität: 18.12.1989 DE 3941746
(43) Veröffentlichungstag der Anmeldung: 26.06.1991
(73) Patentinhaber: SIEMENS AKTIENGESELLSCHAFT, 80333 München (DE)
(72) Erfinder: Thanhäuser, Gerhard, Dipl.-Ing. (TU), W-8905 Mering (DE); Wipf, Annemarie, Dipl.-Ing. (FH), W-8000 München 21 (DE)

(56) Entgegenhaltungen:
- EP-A- 0 266 285
- DE-A- 3 723 187
- DE-A- 3 833 618
- TELCOM REPORT Bd. 12, Nr. 6, November 1989, MUNCHEN DE Seiten 192 - 195 D MERUND THANNH[USER 'Mehr Platz auf dem Lichtwellenleiter'

## Beschreibung

Die Erfindung betrifft ein Verfahren zur Übertragung eines digitalen Zusatzsignals und eine Anordnung zur Durchführung des Verfahrens entsprechend den Oberbegriffen der Ansprüche 1 und 5.

Eine solche Zusatzsignalübertragung ist aus der DE-A- 3 723 187 bekannt.

Aus der DE-Al-33 30 683 ist ein Übertragungssystem für digitale Signale hoher Schrittgeschwindigkeit bekannt, bei dem zusätzlich ein Signal vergleichsweise niedriger Schrittgeschwindigkeit mitübertragen wird. Das bekannte Übertragungssystem enthält in den Leitungsendgeräten Codeumsetzer, die das zu übertragende digitale Nutzsignal in den eigentlichen Übertragungscode sendeseitig umsetzen und empfangsseitig rückumsetzen. Im sendeseitigen Codeumsetzer wird das benötigte Taktsignal mittels einer Phasenregelschleife erzeugt und zur Übertragung des Zusatzsignals die Regelspannung der Phasenregelschleife zusätzlich amplitudenmoduliert und damit über das Taktsignal die an die Strecke abgegebenen Signale phasenmoduliert. Empfangsseitig wirkt der in der Phasenregelschleife für die Takterzeugung enthaltene Phasendiskriminator auch als Demodulator für die Zusatzsignale, die am Phasendiskriminatorausgang entnehmbar sind.

Wegen der beschränkten Übertragungskapazität aufgrund eines beschränkten zulässigen Phasenhubs wurde ein in der deutschen Patentanmeldung P 39 39 640.1 (= EP-A- 0 429 889, veröffentlicht am 05.06.91) beschriebenes Verfahren entwickelt, bei dem das Nutzsignal im CMI-Code übertragen und bei dessen Erzeugung wenigstens einer der nach der CMI-Coderegel verbotenen Elementkombinationen ein binärer Signalinhalt zugeordnet wird. Um die Übertragung des Nutzsignals möglichst wenig zu stören, wird dabei nur der Beginn eines Einsbits oder eines Nullbits des Zusatzsignals markiert. Die Übertragung des Zusatzsignals erfolgt dabei durch redundante Codierung und Verletzung der Coderegel, wobei die Verletzung so vorgenommen wird, daß empfangsseitig zwischen störungsbedingten Coderegelverletzungen und den Coderegelverletzungen zur Übertragung des Zusatzsignals unterschieden werden kann. Ein ähnliches Verfahren wurde in der DE-A- 3 723 187 beschrieben. Durch die Zuordnung jeweils einer Coderegelverletzung zu einem Bit des Zusatzsignals, das eine im Vergleich zum Nutzsignal sehr niedrige Bitrate aufweist, entsteht ein Datenimpuls, der bezogen auf die Periodendauer des zugehörigen Taktsignals äußerst schmal ist. Um ein Übertragungssystem in dieser Weise ohne Verwendung eines Verwürflers realisieren zu können, könnte man zur Sicherstellung der empfangsseitigen Takterzeugung einen redundanten Code, beispielsweise einen Zweiphasencode in Form des bekannten CDC- oder des Manchester-Codes verwenden, der auch bei NRZ-Signalen und bei Dauernull bzw. einer Dauereins eine genügende Anzahl von Signalwechseln zur Taktregenerierung bereitstellt. Die erwähnten Codes verlangen jedoch eine zumindest halbbitbreite Übertragung von Einsbits und sind daher nicht ohne weiteres für ein Verfahren mit extrem schmalen Datenimpulsen geeignet. Auch die Verwendung eines Monoflops zur Impulsdehnung führt zu einem erhöhten Aufwand, da wegen der Gefahr einer hohen Zeichenverzerrung die Lage der abfallenden Impulsflanke im Bitraster sehr genau einzuhalten ist und dies von einem Monoflop nicht ohne weiteres erwartet werden kann.

Die Aufgabe bei der vorliegenden Erfindung besteht also darin, eine Möglichkeit zur Zusatzsignalübertragung zu schaffen, bei der empfangsseitig ohne großen Aufwand ein Taktsignal für das Zusatzsignal erzeugt werden kann.

Erfindungsgemäß wird die Aufgabe durch ein Verfahren der eingangs erwähnten Art gelöst, das durch die Merkmale des Kennzeichens des Patentanspruchs 1 weitergebildet ist. Dabei ergibt die Erzeugung eines Kombinationssignals aus dem digitalen Zusatzsignal und dem zugehörigen Taktsignal eine hohe Sicherheit bei der empfangsseitigen Erkennung der Taktphase bei vergleichsweise geringem sendeseitigen Aufwand. Bevorzugte Ausbildungen des erfindungsgemäßen Verfahrens sind in den Patentansprüchen 2 bis 4 beschrieben. Eine vergleichsweise wenig aufwendige und leicht integrierbare Anordnung zur Durchführung des erfindungsgemäßen Verfahrens ist in den Patentansprüchen 5 bis 7 beschrieben.

Die Erfindung soll im folgenden anhand eines in der Zeichnung dargestellten Ausführungsbeispiels näher erläutert werden.

Dabei zeigt
- Fig. 1: ein Zeitdiagramm des aus dem Zusatzsignal und dem zugehörigen Taktsignal erzeugten Kombinationssignals und
- Fig. 2: eine Schaltungsanordnung zur Erzeugung des Kombinationssignals nach Fig. 1.

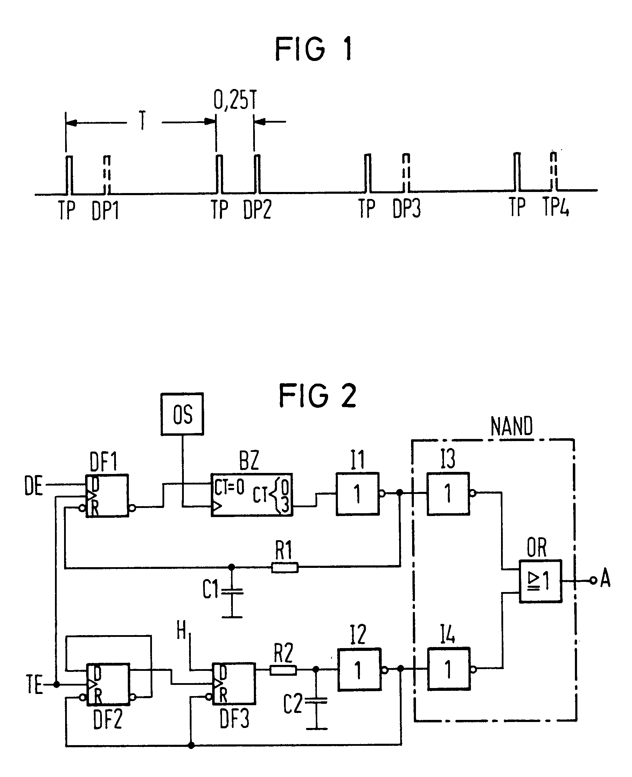

Das in der Fig. 1 dargestellte Impulsdiagramm zeigt das erzeugte Kombinationssignal, das durch absichtlich erzeugte Coderegelverletzungen bei der Umcodierung des digitalen Nutzsignals von diesem mitübertragen wird. Das Kombinationssignal weist eine Bitrate auf, die der des digitalen Zusatzsignals mit der Bitdauer T entspricht. Am Beginn jedes Bits des Kombinationssignals enthält dieses einen gegenüber 1/4 der Bitdauer T vergleichsweise sehr kurzen Taktimpuls TP, so daß das Kombinationssignal ein festes Taktimpulsraster aufweist, das empfangsseitig leicht zur Erzeugung eines neuen Taktsignals ausgewertet werden kann. Zur Übertragung der Zusatzsignalinformation ist im Abstand von etwa 1/4 Bitperiode T in das Taktimpulsraster nach dem Taktimpuls ein Datenimpuls DP einblendbar, dessen Länge etwa der der Taktimpulse TP entspricht. Die Dauer von Takt- und Datenimpulsen ist vergleichsweise klein gegenüber dem zeitlichen Abstand zwischen unmittelbar aufeinanderfolgenden Takt- und Datenimpulsen von etwa 1/4 Bitperiode. Um die Anzahl der Coderegelverletzungen zu begrenzen, wird ein Datenimpuls nur dann eingeblendet, wenn im digitalen Zusatzsignal ein Bit mit einem bestimmten logischen Pegel beginnt. Dabei kann frei gewählt werden, ob nur der Beginn von binären Einsbits oder der von binären Nullbits markiert werden soll, wegen der leichteren Erkennbarkeit wurde beim Ausführungsbeispiel der von binären Einsbits gewählt. Damit gibt also das zweite Datenbit DP2 den Beginn eines binären Einsbits des digitalen Zusatzsignals an. Der Abstand von etwa 1/4 Bitperiode T zwischen Taktimpuls und Datenimpuls ist dabei unkritisch, er wurde gewählt, um empfangsseitig leichter die Einsbits des Zusatzsignals in der ursprünglichen Länge wieder erzeugen zu können und um auch bei größerem Phasenjitter der Datenimpulse eine zuverlässige Unterscheidung von Takt- und Datenimpulsen auf der Empfangsseite zu ermöglichen.

Die in der Fig. 2 gezeigte Schaltungsanordnung zur Erzeugung des in der Fig. 1 dargestellten Kombinationssignals enthält zwei Reihenschaltungen, die jeweils mit einem D-Flipflop beginnen. In der oberen Reihenschaltung werden die Datenimpulse DP und in der unteren Reihenschaltung die Taktimpulse TP erzeugt, beide werden im ausgangsseitigen NAND-Gatter zusammengeführt, so daß an dessen Ausgangsanschluß A das gewünschte Kombinationssignal vorliegt.

Der obere Schaltungsteil enthält ein erstes D-Flipflop DF1, dessen D-Eingang mit dem Eingang DE für das digitale Zusatzsignal und dessen invertierender Ausgang mit dem Zähleingang eines Binärzählers BZ verbunden ist. Der Takteingang des als 4Bit-Zähler aufgebauten Binärzählers BZ ist mit dem Ausgangsanschluß eines Oszillators OS verbunden, der auf der 32-fachen Bitfrequenz des digitalen Zusatzsignals schwingt. Der Ausgangsanschluß des 4Bit-Zählers BZ für die höchste Zählerstellung 3 ist über einen ersten Inverter I1 mit einem ersten Eingang des NAND-Gatters NAND sowie über einen ersten Widerstand R1 mit dem Rücksetzeingang R des ersten D-Flipflops DF1 sowie über einen ersten Kondensator C1 mit Bezugspotential verbunden.

Der untere Schaltungsteil zur Taktpulserzeugung enthält ein zweites D-Flipflop DF2, dessen Takteingang mit dem Takteingang des ersten D-Flipflops DF1 sowie mit einem Eingang TE für ein, dem Signal am Eingang DE entsprechendes Taktsignal verbunden ist. Der D-Eingang des zweiten D-Flipflops ist mit dessem invertierenden Ausgang verbunden, an den nichtinvertierenden Ausgang ist der Takteingang eines dritten D-Flipflops DF3 angeschlossen, dessen D-Eingang mit einem Anschluß H für ein Potential entsprechend dem logischen Hochpegel und dessen nichtinvertierender Ausgang über einen zweiten Widerstand R2 mit dem Eingangsanschluß eines zweiten Inverters I2 sowie über einen zweiten Kondensator C2 mit Bezugspotential verbunden ist. Der Ausgangsanschluß des zweiten Inverters I2 ist mit einem zweiten Eingang des NAND-Gatters NAND sowie mit den Rücksetzeingängen R des zweiten und des dritten D-Flipflops DF2, DF3 verbunden. Das NAND-Gatter NAND enthält einen mit dessen ersten Eingangsanschluß verbundenen dritten Inverter I3 und einen mit dessen zweiten Eingangsanschluß verbundenen vierten Inverter I4, die Ausgangsanschlüsse der beiden Inverter sind zu einer ODER-Schaltung mit dem Ausgangsanschluß A verbunden.

Die Taktpulserzeugung im unteren Schaltungsteil wird von der ansteigenden Flanke des am Eingangsanschluß TE anstehenden Taktsignals ausgelöst, wodurch das zweite D-Flipflop DF2 auf den logischen Einspegel gesetzt wird. Das nichtinvertierte Ausgangssignal des zweiten D-Flipflops DF2 taktet das dritte D-Flipflop DF3, dessen Ausgangsimpuls verzögert beide D-Flipflops DF2, DF3 zurücksetzt. Die Verzögerung wird dabei durch das aus dem zweiten Widerstand und dem zweiten Kondensator gebildete RC-Verzögerungsglied und durch den zweiten Inverter I2 bewirkt. Die resultierende Breite des erzeugten Impulses ist dabei die Summe aus einer Flipflop-Laufzeit, der Verzögerung im RC-Glied und der Laufzeit durch den Inverter. Die Kombination von zwei D-Flipflops DF2, DF3 wurde zur Angleichung der Laufzeiten von Taktimpuls- und Datenimpulserzeugung vorgesehen.

Die Datenimpulserzeugung im oberen Schaltungsteil wird ebenfalls von der ansteigenden Flanke des Eingangstaktes ausgelöst, die bei Vorliegen eines Einsbits im Datensignal den nachgeschalteten 4Bit-Binärzähler BZ freigibt. Der freilaufende Oszillator OS mit einer Frequenz von etwa dem 32-fachen der Frequenz des Taktsignals am Eingang TE taktet den Binärzähler BZ. Nach sieben bis acht Perioden des Oszillatorausgangssignals werden ähnlich der Taktimpulserzeugung das erste D-Flipflop DF1 und der Binärzähler BZ durch den ersten Inverter I1 verzögert zurückgesetzt, so daß ein resultierender Impuls etwa gleicher Breite wie der im unteren Schaltungsteil erzeugte Taktimpuls entsteht. Die relative Phasenlage zwischen Eingangstakt und Oszillatortakt bestimmt die Verzögerung bei der Einblendung des Datenimpulses relativ zum jeweiligen Taktimpuls. Entsprechend 7/32 bzw. 8/32 erfolgt die Einblendung etwa 0,22 T bis 0,25 T nach dem Taktimpuls. Bei plesiochronem Betrieb des Oszillators OS in Bezug auf das Taktsignal am Eingang TE kann ein verjitterter Datenimpuls DP entstehen. Diese Verjitterung ist aber unkritisch, da aus den Datenimpulsen empfangsseitig kein Taktsignal abgeleitet wird, sondern dies wie beschrieben ausschließlich aus dem Taktimpulsraster gebildet wird.

Die mit der beschriebenen Sendeseite zusammenarbeitende Empfangsseite ist in der parallelen deutschen Patentanmeldung P 3 941 747 (= EP-A- 0 433 707, veröffentlicht am 26.06.91) beschrieben.

## Patentansprüche

1. Verfahren zur Übertragung eines digitalen Zusatzsignals mit vergleichsweise niedriger Bitfolgefrequenz zusammen mit dem in einem Kanal eines digitalen Übertragungssystems übertragenen digitalen Nutzsignal durch Einblendung des Zusatzsignals bei der Umcodierung des binären Nutzsignals in einen Übertragungs- oder Streckencode,
**dadurch gekenzeichnet,**
daß das digitale Zusatzsignal und ein zugehöriges Taktsignal zu einem Kombinationssignal zusammengefaßt werden, dessen Bitrate dem des zusätzlich zu übertragenden digitalen Signals entspricht und dabei zu Beginn eines jeden Bits des Kombinationssignals ein gegenüber der Bitperiode vergleichsweise kurzer Taktimpuls (TP) erzeugt wird und in festen zeitlichen Abstand zu diesem jeweils dann ein Datenimpuls (DP) erzeugt wird, wenn im digitalen Zusatzsignal ein Bit mit einem bestimmten logischen Pegel beginnt.

2. Verfahren nach Patentanspruch 1,
**dadurch gekenzeichnet,**
daß der Datenimpuls dann erzeugt wird, wenn im digitalen Zusatzsignal ein binäres Einsbit auftritt.

3. Verfahren nach Patentanspruch 1,
**dadurch gekenzeichnet,**
daß der Datenimpuls dann erzeugt wird, wenn im digitalen Zusatzsignal ein binäres Nullbit auftritt.

4. Verfahren nach Patentansprüchen 1 bis 3,
**dadurch gekenzeichnet,**
daß der Datenimpuls im zeitlichem Abstand von etwa 1/4 Bitperiode nach dem Taktimpuls erzeugt wird und die Dauer des Datenimpulses und des Taktimpulses vergleichsweise klein gegenüber dem zeitlichen Abstand ist.

5. Anordnung zur Übertragung eines digitalen Zusatzsignals mit vergleichsweise niedriger Bitfolgefrequenz zusammen mit dem in einem Kanal eines digitalen Übertragungssystems übertragenen digitalen Nutzsignal durch Einblendung des Zusatzsignals bei der Umcodierung des binären Nutzsignals in einen Übertragungs- oder Streckencode, zur Durchführung eines Verfahrens nach Patentanspruch 1,
**dadurch gekenzeichnet,**
daß ein erstes D-Flipflop (DF1) vorgesehen ist, dessen D-Eingang mit dem Eingang (DE) für das digitale Zusatzsignal und dessen invertierender Ausgang mit dem Zähleingang eines Binärzählers (BZ) verbunden ist,
daß der Takteingang des Binärzählers (BZ) mit dem Ausgang eines Oszillators (OS) mit einer Schwingfrequenz entsprechend einem ganzen Vielfachen der Bitfolgefrequenz des digitalen Zusatzsignals verbunden ist,
daß der Ausgang des Binärzählers (BZ) über einen ersten Inverter (I1) mit einem ersten Eingang eines NAND-Gatters (NAND) und über einen ersten Widerstand (R1) mit dem Rücksetzeingang (R) des ersten D-Flipflops (DF1) und mit dem einen Anschluß eines ersten Kondensators (C1) verbunden ist, dessen anderer Anschluß mit Bezugspotential verbunden ist,
daß ein zweites D-Flipflop (DF2) vorgesehen ist, dessen Takteingang mit dem Takteingang des ersten D-Flipflops (DF1) und mit einem Taktsignaleingang (TE) verbunden ist,
daß der invertierende Ausgang des zweiten D-Flipflops (DF2) mit dessem D-Eingang und der nichtinvertierende Ausgang mit dem Takteingang eines dritten D-Flipflops (DF3) verbunden ist,
daß der D-Eingang des dritten D-Flipflops (DF3) mit einem Anschluß (H) für ein Potential entsprechend dem logischen Hochpegel und der nichtinvertierende Ausgang des dritten D-Flipflops (DF3) über einen zweiten Widerstand (R2) mit dem Eingang eines zweiten Inverters (I2) und mit dem einen Anschluß eines zweiten Kondensators (C2) verbunden ist, dessen zweiter Anschluß mit Bezugspotential verbunden ist,
daß der Ausgang des zweiten Inverters (I2) mit den Rücksetzeingängen (R) des zweiten und des dritten D-Flipflops (DF2, DF3) sowie mit dem zweiten Eingang des NAND-Gatters (NAND) verbunden ist und
daß am Ausgang (A) dieses Gatters das Kombinationssignal entnehmbar ist.

6. Anordnung nach Patentanspruch 5,
**dadurch gekenzeichnet,**
daß der Oszillator (OS) eine Schwingung mit einer Frequenz entsprechend dem 32-fachen der Bitfolgefrequenz des Zusatzsignals erzeugt und der Binärzähler (BZ) als 4-Bit-Zähler ausgebildet ist.

7. Anordnung nach Patentanspruch 6,
**dadurch gekenzeichnet**,
daß das NAND-Gatter (NAND) einen an den Ausgang des ersten Inverters (I1) angeschlossenen dritten Inverter (I3) und einen an den Ausgang des zweiten Inverters (I2) angeschlossenen vierten Inverter (I4) enthält, deren Ausgangsanschlüsse in einer ODER-Schaltung (OR) miteinander verknüpft sind und daß der Ausgang der ODER-Schaltung mit dem Ausgangsanschluß (A) verbunden ist.

## Claims

1. Method for transmitting a digital additional signal with a comparatively low bit rate together with the digital wanted signal transmitted in one channel of a digital transmission system by inserting the additional signal during the coding of the binary wanted signal into a transmission or link code, characterized in that the digital additional signal and an associated clock signal are combined to form a combined signal, the bit rate of which corresponds to that of the additional digital signal to be transmitted, and a comparatively short clock pulse (TP) in comparison to the bit period is generated thereby at the beginning of each bit of the combined signal and, at fixed time intervals from this, in each case one data pulse (DP) is generated whenever a bit with a given logical level begins in the digital additional signal.

2. Method according to Patent Claim 1, characterized in that the data pulse is generated whenever a binary one-bit occurs in the digital additional signal.

3. Method according to Patent Claim 1, characterized in that the data pulse is generated whenever a binary zero-bit occurs in the digital additional signal.

4. Method according to Patent Claims 1 to 3, characterized in that the data pulse is generated at a time interval of approximately a 1/4 bit period following the clock pulse, and the duration of the data pulse and of the clock pulse is comparatively short in comparison to the time interval.

5. Arrangement for transmitting a digital additional signal with a comparatively low bit rate together with the digital wanted signal transmitted in one channel of a digital transmission system by inserting the additional signal during the coding of the binary wanted signal into a transmission or link code, for carrying out a method according to Patent Claim 1, characterized in that a first D-type flip-flop (DF1) is provided, the D input of which is connected to he input (DE) for the digital additional signal, and the inverting output of which is connected to the count input of a binary counter (BZ), in that the clock input of the binary counter (BZ) is connected to the output of an oscillator (OS) having an oscillating frequency corresponding to an integral multiple of the bit rate of the digital additional signal, in that the output of the binary counter (BZ) is connected via a first inverter (I1) to a first input of a NAND gate (NAND) and via a first resistor (R1) to the reset input (R) of the first D-type flip-flop (DF1), and to the one terminal of a first capacitor (C1), the other terminal of which is connected to reference potential, in that a second D-type flip-flop (DF2) is provided, the clock input of which is connected to the clock input of the first D-type flipflop (DF1) and to a clock signal input (TE), in that the inverting output of the second D-type flip-flop (DF2) is connected to the D input thereof and the non-inverting output is connected to the clock input of a third D-type flip-flop (DF3), in that the D input of the third D-type flip-flop (DF3) is connected to a terminal (H) for a potential corresponding to the logical high level, and the non-inverting output of the third D-type flip-flop (DF3) is connected via a second resistor (R2) to the input of a second inverter (I2) and to the one terminal of a second capacitor (C2), the second terminal of which is connected to reference potential, in that the output of the second inverter (I2) is connected to the reset inputs (R) of the second and of the third D-type flip-flop (DF2, DF3) and also to the second input of the NAND gate (NAND), and in that the combined signal can be picked up at the output (A) of this gate.

6. Arrangement according to Patent Claim 5, characterized in that the oscillator (OS) generates an oscillation having a frequency corresponding to 32 times the bit rate of the additional signal, and the binary counter (BZ) is designed as a 4-bit counter.

7. Arrangement according to Patent Claim 6, characterized in that the NAND gate (NAND) contains a third inverter (I3) connected to the output of the first inverter (I1), and a fourth inverter (I4) connected to the output of the second inverter (I2), the output terminals of which are gated in an OR circuit (OR), and in that the output of the OR circuit is connected to the output terminal (A).

## Revendications

1. Procédé pour la transmission d'un signal numérique supplémentaire possédant une fréquence de récurrence des bits comparativement faible, conjointement avec le signal numérique utile transmis dans un canal d'un système de transmission numérique, par insertion du signal supplémentaire lors du transcodage du signal binaire utile en un code de transmission ou un code de section,
caractérisé par le fait que le signal numérique utile et un signal de cadence associé sont réunis en un signal combiné, dont la cadence binaire correspond à celle du signal numérique supplémentaire devant être transmis, et qu'une impulsion de cadence (TP) comparativement inférieure à la période des bits, est produite au début de chaque bit du signal combiné et qu'une impulsion de données (DP) est produite à un intervalle de temps fixe par rapport à l'impulsion de cadence, lorsque, dans le signal numérique supplémentaire, un bit commence avec un niveau logique déterminé.

2. Procédé suivant la revendication 1, caractérisé par le fait que l'impulsion de données est produite lorsqu'un bit binaire "un" apparaît dans le signal numérique supplémentaire.

3. Procédé suivant la revendication 1, caractérisé par le fait que l'impulsion de données est produite lorsqu'un bit binaire "zéro" apparaît dans le signal numérique supplémentaire.

4. Procédé suivant les revendications 1 à 3, caractérisé par le fait que l'impulsion de données est produite à un intervalle de temps égal à environ 1/4 de la période des bits, après l'impulsion de cadence et que la durée de l'impulsion de durée et de l'impulsion de cadence est comparativement faible par rapport à cet intervalle de temps.

5. Dispositif pour la transmission d'un signal numérique supplémentaire possédant une fréquence de récurrence des bits comparativement faible, conjointement avec le signal numérique utile transmis dans un canal d'un système de transmission numérique, par insertion du signal supplémentaire lors du transcodage du signal binaire utile en un code de transmission ou un code de section, pour la mise en oeuvre d'un procédé selon la revendication 1,
caractérisé par le fait qu'il est prévu une première bascule bistable de type D (DF1), dont l'entrée D est reliée à l'entrée (DE) pour le signal numérique supplémentaire et dont la sortie inverseuse est reliée à l'entrée de comptage d'un compteur binaire (BZ), que l'entrée de cadence du compteur binaire (BZ) est reliée à la sortie d'un oscillateur (OS) produisant une fréquence d'oscillation qui correspond à un multiple entier de la fréquence de récurrence des bits du signal numérique supplémentaire,
que la sortie du compteur binaire (BZ) est reliée, par l'interémdiaire d'un premier inverseur (I1), à une première entrée d'une porte NON-ET (NAND) et, par l'intermédiaire d'une première résistance (R1), à l'entrée de remise à l'état initial (R) de la première bascule bistable de type D (DF1) et à une borne d'un premier condensateur (C1) dont l'autre borne borne est placée au potentiel de référence,
qu'il est prévu une seconde bascule bistable de type D (DF2), dont l'entrée de cadence est reliée à l'entrée de cadence de la première bascule bistable de type D (DF1) et à une entrée de signal de cadence (TE),
que la sortie inverseuse de la seconde bascule bistable de type D (DF2) est reliée à l'entrée D de cette bascule et que la sortie non inverseuse est reliée à l'entrée de cadence d'une troisième bascule bistable de type D (DF3),
que l'entrée D de la troisième bascule bistable de type D (DF3) est reliée à une borne (H) pour un potentiel, en fonction du niveau haut logique, et que la sortie non inverseuse de la troisième bascule bistable de type D (DF3) est reliée, par l'intermédiaire d'une seconde résistance (R2), à l'entrée d'un second inverseur (I2) et à une borne d'un second condensateur (C2), dont la seconde borne est placée au potentiel de référence,
que la sortie du second inverseur (I2) est reliée aux entrées de remise à l'état initial (R) des seconde et troisième bascules bistables de type D (DF2,DF3) ainsi qu'à la seconde entrée de la porte NON-ET (NAND), et
que le signal combiné peut être prélevé sur la sortie (A) de cette porte.

6. Dispositif suivant la revendication 5, caractérisé par le fait que l'oscillateur (OS) produit une oscillation ayant une fréquence correspondant à 32 fois la fréquence de récurrence des bits du signal supplémentaire et que le compteur binaire (BZ) est réalisé sous la forme d'un compteur à 4 bits.

7. Dispositif suivant la revendication 6, caractérisé par le fait que la porte d'entrée NON-ET (NAND) comporte un troisième inverseur (I3), qui est raccordé à la sortie du premier inverseur (I1), et un quatrième inverseur (I4), qui est raccordé à la sortie du second inverseur (I2), et dont les bornes de sortie sont réunies selon un circuit OU (OR) et que la sortie du circuit OU est reliée à la borne de sortie (A).
